Europäisches Patentamt

European Patent Office

Office européen des brevets

(11) Publication number: **0 152 232**
A2

# EUROPEAN PATENT APPLICATION

(21) Application number: 85300640.1

(22) Date of filing: 30.01.85

(51) Int. Cl.⁴: **E 02 B 3/12**

(30) Priority: 03.02.84 GB 8402868

(43) Date of publication of application:
21.08.85 Bulletin 85/34

(84) Designated Contracting States:
FR GB IT NL SE

(71) Applicant: United Wire Group Public Limited Company
Granton Park Avenue
Edinburgh EH5 1HT(GB)

(72) Inventor: Miller, Keith Edmund James
11 Gamekeepers Park
Barnton Edinburgh EH4 6PA Scotland(GB)

(72) Inventor: Bews, Andrew Muir
35 Crammond Road North
Edinburgh EH4 6LY Scotland(GB)

(74) Representative: Wain, Christopher Paul et al,
A.A. THORNTON & CO. Northumberland House 303-306
High Holborn
London WC1V 7LE(GB)

(54) Stabilisation mat.

(57) A jointed massive mat structure is provided comprising
a plurality of concrete elements (1) flexibly linked together,
for example by ropes or wires (2, 3, 4, 5), the mat weighing at
least ½ ton (508 kg) and usually from 2 to 20 tons (2000 kg to
20,000 kg), and being useful for stabilisation of land or
sea-beds, and particularly for stabilising structures such as
pipelines (10) laid on a sea-bed. The massive mat is laid over
a pipeline and the mat flexes to conform to the shape of the
pipeline and firmly anchors it in place.

FIG. 3.

- 1 -

STABILISATION MAT

This invention relates to the stabilisation of land and sub-sea soils and of structures thereon.

There are a large number of situations in which it is necessary or desirable to stabilise land, sea-bed or other sub-aqua terrains. For example, where it is desired to form a temporary road or track over soft or sandy ground, the ground will require some stabilisation to enable it to support loads without moving. Often, the sea bed around offshore structures needs to be stabilised to prevent erosion by water currents. Also, where erosion has occurred, some means of building up the eroded area in a stable fashion is desirable. Furthermore, especially for sub-sea purposes, the structures themselves may also require stabilisation. For example, sub-sea pipelines are subjected to considerable forces tending to lift them from the sea-bed or otherwise move them, and some means of anchoring is often necessary or desirable.

In many of these situations, stabilisation is achieved by in situ casting of concrete, but this is often difficult to carry out (especially sub-sea) and can also be a very costly and time-consuming operation.

We have now found that, in many instances, the desired stabilisation can be achieved very much more simply and easily, with consequent savings in cost.

In accordance with a feature of the present invention, stabilisation is achieved by the use of a relatively massive but flexible mat constructed principally of a plurality of individual concrete (or like) elements, each element being jointed to at least one other adjacent such element to form an articulate unitary mat structure weighing at least ½ ton (508 kg).

In one preferred arrangement, the mat includes a series of elongate concrete elements arranged side-by-side and each laterally jointed to its adjacent element(s) whereby the mat can flex at the joints along axes parallel with, but spaced between, respective adjacent elements in said series. A mat of the invention can consist of one such series of elements, or it may also include other elements. Thus, it may comprise at least two of said series of elements, the two series being arranged with elements of one series lying end-to-end with respective elements of the other series, and being jointed therebetween so that said mat additionally can flex at the joints between the ends of the elements, along an axis lying generally perpendicular to said elongate elements.

The mat flexes at the joints between the elements and flexibility along various different axes can be achieved by appropriate choice of elements and the provision of joints therebetween. It will be appreciated that there are a large number of possible ways of arranging the elements (elongate or non-elongate) with joints therebetween, to form mats of the invention, and the precise arrangement adopted can be chosen to suit the intended end-use of the mat, e.g. to provide the optimum shape, size and flexibility for the purpose for which the mat is to be used.

The mats of the invention will lie generally flat on a horizontal surface, but will normally overbend and underbend, i.e. can normally be flexed concave or convex. This allows them to be laid over a pipeline or other structure, for example, and to conform generally to the structure's shape, especially to the curvature of pipes.

When a mat of the invention, comprising a series of elongate elements laid side-by-side, is to be used to stabilise a pipe, it is draped over the pipe with the elements being aligned generally with the pipe. The placement of the mat can be quite difficult in practice, especially if (as is most usual) the massive mat is placed in position by lowering it from an overhead support. To assist, we have found that it is highly advantageous to suspend the mat by its two ends, and to wedge the intermediate elongate members to keep the intermediate portion of the mat generally horizontal. For this purpose, the elongate members may themselves be profiled so that, at least in the intermediate portion, the mat will not underbend but remain flat, or separate wedge members may be inserted between such adjacent elongate members to restrict flexure of the joints to prevent underbend. Any wedge members should most preferably have negative buoyancy (for sub-aqua use) and may, for example, be made of glass-reinforced plastic and a heavy ballast material, or of concrete.

The joints between adjacent elements can be formed in a number of ways. For example, the elements can be cast about one or more "heavy" ropes (usually made by plaiting rope elements) or steel wires, so that the ropes or wires pass through each element. Knots, loops or other enlarged portions may be provided on the ropes or wires to locate them positively within the elements. Instead of using ropes or wires, heavy duty webbing could be used. Alternatively, each element can be provided with one or more hinge members which can be coupled to the hinge members of other elements. For example, protruding hooks and eyes can be formed on, or provided on, the elements, or adjacent elements can be hinged together by using a third member, e.g. a rod, bolt or the like passing through protruding eyelets or the like on each element.

In another embodiment, the elements can be attached to a preformed mat, grid or net structure of suitably strong material.

It will be appreciated that, depending on the precise construction adopted, a mat of the invention may be entirely prefabricated off-site, or it may be assembled on-site. Assembly on-site can be advantageous where it is difficult to assess exactly what will be needed to achieve the desired stabilisation.

In order that the invention may be more fully understood, various embodiments of the invention will now be described, by way of illustration only, with reference to the accompanying drawings, wherein:

FIGURE 1 is a view of part of one embodiment of mat of the invention;

FIGURE 2 is a section through two adjacent members of the mat of Figure 1 showing the knotting of the heavy rope;

FIGURE 3 shows the mat of Figure 1 laid over a sub-sea pipe to stabilise it;

FIGURE 4A shows another embodiment of mat of the invention;

FIGURE 4B is a detailed view of one end of an element for the mat of Figure 4A;

FIGURE 4C is a plan view of the end shown in Figure 4B;

FIGURE 5 shows a mat of the same basic construction as Figure 1 suspended ready for lowering onto a sub-sea pipe;

FIGURE 6 shows the mat of Figure 5 being laid on to a pipe;

FIGURES 7 and 8 are cross-sections of alternatively shaped elongate concrete elements for use in the mats of the invention;

FIGURE 9 shows in cross-section another shape of elongate element for use in the mats of the invention;

FIGURES 10 and 11 are top plan views of two non-elongate elements for use in the mats of the invention; and

FIGURE 12 is a plan view of an embodiment of mat of the invention comprising non-elongate elements.

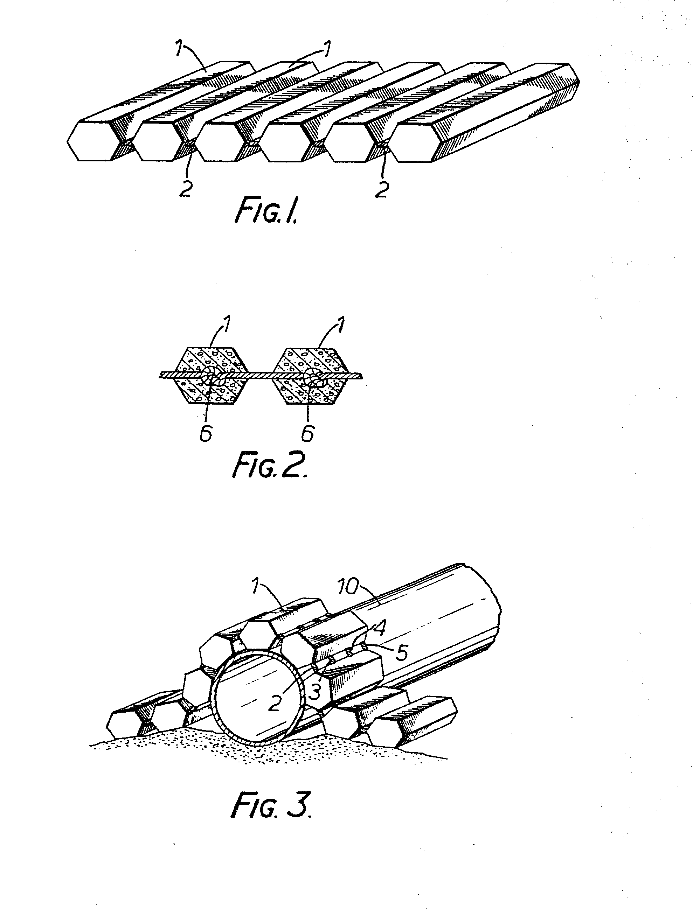

Referring to the drawings, Figures 1 to 3 show a simple construction of mat of the invention. It comprises nine elongate concrete elements 1 (Figure 1 shows only part of the mat), each of hexagonal cross-section, laid side-by-side with their axes parallel. The elements 1 are laterally linked together by four lengths of heavy rope or wire 2,3,4 and 5. Each length of rope passes through all the elements 1, generally at right angles to the longitudinal axes thereof. Ropes 2 and 5 are at opposite ends of the elements and ropes 3 and 4 are at intermediate positions (see Figure 3).

The ropes are fixed to the concrete elements by providing knots 6 (or loops or other enlarged portions) in each rope, and then casting the concrete elements around the knots in each rope (Figure 2). The knots are completely hidden in each concrete element.

Figure 3 shows the mat of Figure 1 layed over a sub-sea pipeline 10. As can be seen, the mat flexes along each hinge axis (between adjacent elements and parallel therewith) so as to conform to the curvature of the pipe (and, if necessary, to conform to the profile of the adjacent sea-bed). Thus, the weight of the mat anchors the pipeline. If water currents tend to raise the pipeline from the sea-bed, the effective anchoring weight of the mat increases as more is raised from the sea-bed, thus increasing the force tending to restore the pipe to its original position.

A major use of the mats of the type shown in Figures 1 to 3 is in anchoring and stabilising sub-sea pipelines as illustrated in Figure 3 (the nearer part of the pipeline 10 has been cut away for clarity of illustration). In practice, mats are positioned over the pipeline at spaced intervals along its length, the spacing being chosen in accordance with the degree of anchoring required. These mats can of course be made in a variety of sizes and, indeed, two or more mats can be joined together on site, for example, to create very large and massive structures. In practice, the elongate elements of the mat of Figure 1 will normally not be less than about 1.5m in length and about 0.3m in thickness. The mat will normally have from 10 to 20 elements so that it will be from about 3m upwards.

The mats are massive: they will normally weigh (in air) from $1\frac{1}{2}$ to 10 tons or, if a high density construction is adopted (i.e. high density concrete), up to 15 to 20 tons. It is weight, provided in the form of a flexible mat able to conform to the pipeline curvature, and of a durable yet simple construction, which makes the mats of the invention so useful. The use of elongate elements (as in the embodiment of Figures 1 to 3) enables the actual anchoring weight imposed over the pipeline (Figure 3) to be maximised, as the axes of the elements lie generally parallel to that of the pipe.

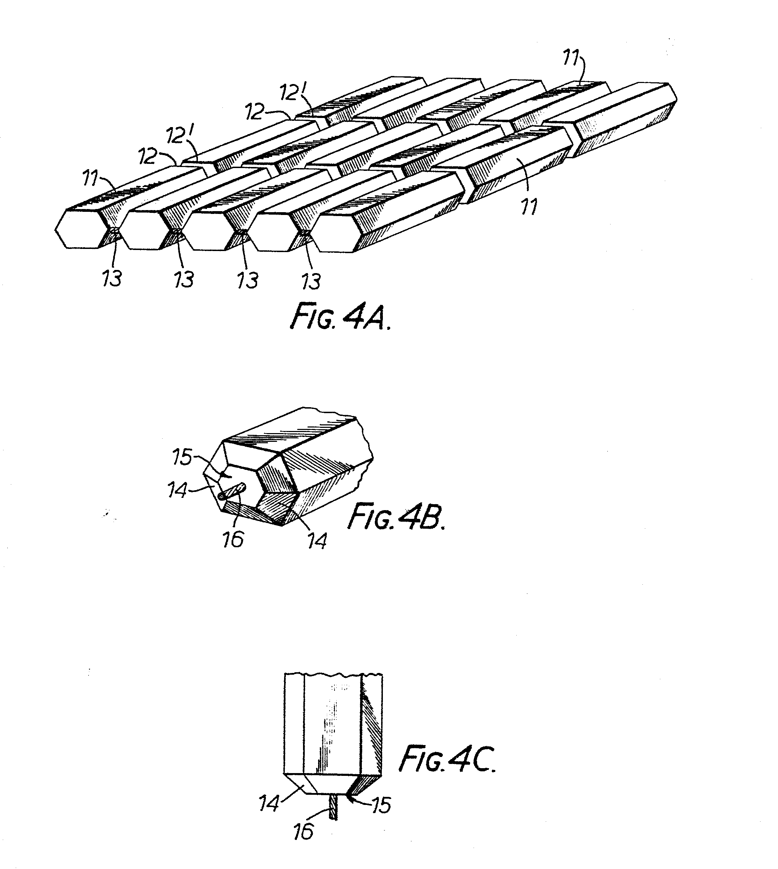

Figure 4A illustrates an embodiment of mat of the invention essentially comprising three mats of the type shown in Figure 1, (although in Figure 4 each comprises only 5 members 11), laid side-by-side with the individual elements aligned and the adjacent ends 12,12' thereof linked with a flexible joint. Again, the joint may be in the form of an embedded rope or otherwise as previously described. Thus, the mat will flex not only along axes parallel to and between adjacent elongate elements, but also along the joints between the adjacent ends 12,12' of the concrete members. (It will be understood that the concrete members are joined laterally by ropes 13 etc. in the same fashion as the members of the mat of Figure 1. Further description of this will not therefore be given.)

Preferably, the adjacent ends 12,12' of the elongate members are bevelled as shown in Figures 4B and 4C, so that upon flexure of the mat, the adjacent end portions of the elongate members will not come into contact (or not until adequate flexure has been permitted). Thus, bevelled end faces 14 are formed leading to reduced size end face 15 through which the linking rope 16 passes.

The mat of Figure 4A can be used in the same way as that illustrated for the mat of Figure 1. However, where substantial anchoring and stabilisation of a pipeline are required, we have found the mats of Figure 4A, laid with the axes of the elongate elements parallel to that of the pipe, are extremely effective. The mats can conveniently be made about 6m long (3 elements long) and laid end to end (optionally joined together on site) continuously along a pipeline. The mat may also be laid on land, or on the sea-bed to consolidate and stabilise the same. When laid on land, cement or tarmac for example, could be poured into the voids to provide a load-bearing surface.

When laid on the sea-bed, the mats of the invention provide a scour prevention system. Moving water currents containing sand or sediment pass over the mat and the alternate solid areas and voids in the mat provide ideal conditions for deposition of sediment in the voids, thereby building up the area of sea-bed in the vicinity of the mat. This can be an important function of the mats of the invention since, when laid adjacent structures such as pipelines or platform legs, they greatly improve the safety and stability of the structure against the effects of water currents.

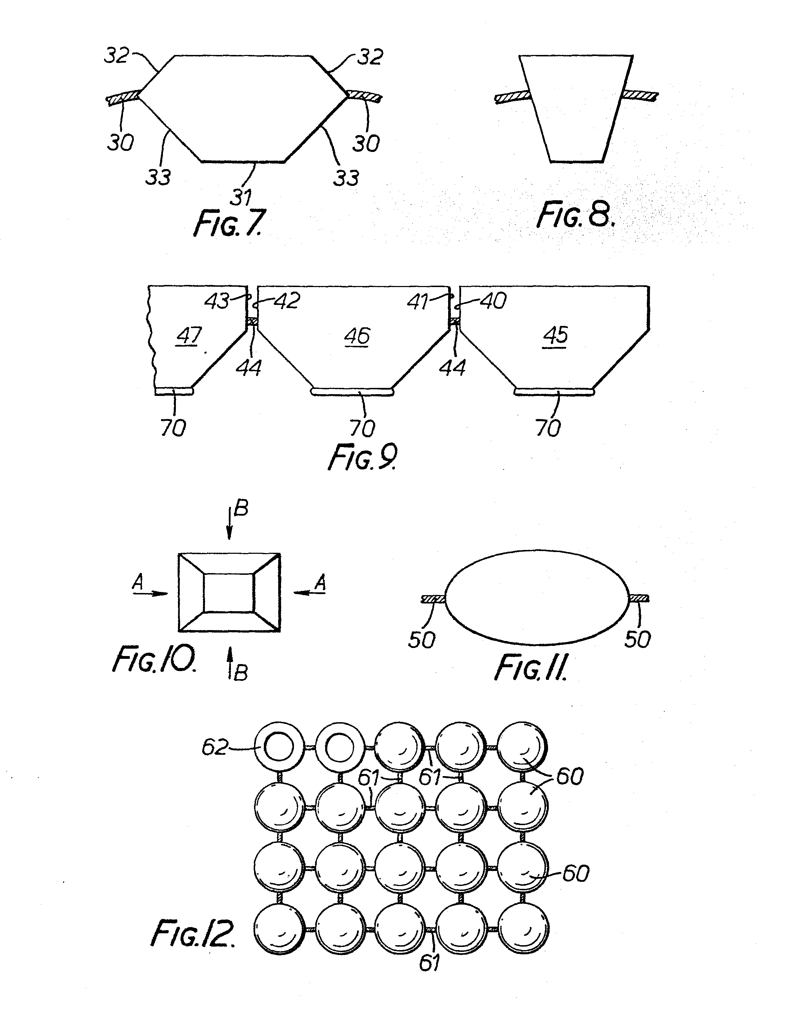

Whilst the mat of Figure 4A has been described and illustrated with elongate elements (as the mat of Figure 1), it is not essential in these mats to use elongate elements. Figure 12 (described hereafter) shows one alternative. Elongate elements are, however, preferred for certain purposes. Such elements made of concrete will normally include reinforcing members running (axially) longitudinally of each element to give adequate beam strength. Welded cage type reinforcement from welded 50 cm. mesh by 5 mm diameter high tensile wire is, for example, suitable. The cross-sectional shape of the elongate elements can vary widely and is not necessarily critical although, for certain purposes to be described, polygonal shapes are preferred.

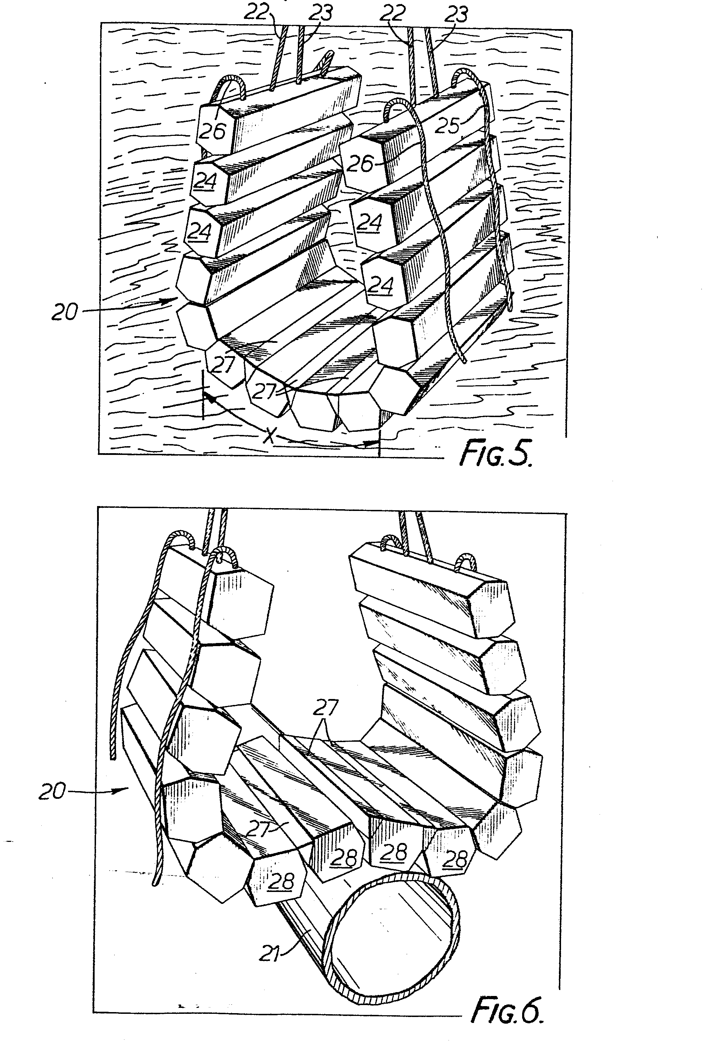

Figures 5 and 6 show a mat 20 of the construction of Figure 1 (but with 14 elongate concrete elements) being lowered to lie over a pipeline 21 (to take up the general position illustrated in Figure 3). Figures 5 and 6 particularly illustrate a highly preferred feature of the invention, namely the use of wedges to provide a landing region on the mat.

In Figure 5, the mat 20 is held suspended by the two intermediate heavy ropes 22,23 (which pass through and are embedded in each element 24 and constitute hinge links therebetween). The two other such ropes 25,26 are (optionally) not used for suspension. As can be seen, the mat adopts broad-based U-shaped configuration. This is achieved by the presence of three wedges 27 extending between adjacent elongate elements in the middle region of the mat (i.e. in the region intermediate the opposite ends of the mat). The three wedges 27 prevent the respective four elongate concrete elements 28 from flexing about the rope links joining them together. Thus, these four elements 28 are constrained to lie on a shallow or flat curve close to the horizontal. This flat curve provides an area on the underside of the suspended mat which is much larger than it would be if no wedges were present. This area - designated by arc X in Figure 5 - greatly assists in placement of the mat over the pipeline 21 as can be seen in Figure 6. When wedges are not used, placement of the mat is much more difficult. The lowermost concrete element tends to slide off the pipeline and this can create various problems.

As illustrated, the wedges 27 extend for the full length of the elements 24 (and 28). This is often convenient but not usually essential. The elements could instead be wedged at each end (and not in the middle) or in the middle and not at each end. Normally, for safety purposes when working sub-sea, the wedges will have a negative buoyancy so that, upon release of the wedging action as the mat folds around the pipeline, they do not float upwards and endanger divers, sea-craft and adjacent installations. They may thus be made of glass-reinforced plastic with a heavy filler, or of concrete, or some other suitable material.

It will be appreciated that, in order to achieve a safe and satisfactory wedging effect, the cross-sectional shape of the elongate concrete elements and the position of the flex link, must be appropriate. So far as cross-sectional shape is concerned, opposed planar faces on adjacent elongate members are preferred as will be clear to a skilled man.

Figures 7 to 9 illustrate different cross-sectional shapes for the elongate concrete (or like) members. As can be seen, Figure 7 shows a non-regular hexagonal shape with the rope link 30 passing at opposed corners. Side 31 will normally be on the underside of the mat and will thus lie directly on the pipeline or sea-bed on which the mat is positioned. Surfaces 32 are smaller than surfaces 33 so that, as the mat flexes to conform to the shape of a pipeline, for example, a smaller area is exposed upwardly (i.e. the area of faces 32 is less than that of faces 33). In this way, the risk of the mat fouling a fishing trawl or net is reduced.

Figure 8 illustrates a trapezoidal shape which can be used but is not especially preferred.

The shape of Figure 9 (two whole element cross-sections (45,46) and part of another (47) are shown) serves a special purpose. The opposed faces 40,41 and 42, 43 are close and parallel when the mat lies flat. The linking rope (44) passes through the lower region of these surfaces. With this construction, the mat cannot flex in two directions but only in one. Thus, element 45 cannot turn anti-clockwise about link 44 since faces 40 and 41 will immediately come into contact and prevent further flexing. In the opposite, clockwise, direction there is no problem. Thus, this type of construction can be used where flexing in one direction only is desired. For example, the intermediate elongate members 28 of Figure 6 could be made of this shape and the use of wedges thereby obviated.

Figure 10 illustrates a non-elongate element useful in a mat of the invention. It is a body which in section along the lines A-A and B-B is a regular hexagon. Rope links may be provided through any faces as desired. Figure 11 illustrates a simple ovoid body having rope links 50 from opposed ends.

Figure 12 shows a mat of the invention made from non-elongate elements. The elements 60 are spheres joined by flex ropes 61. The elements 62 are toroidal in shape. Thus, a mat of the invention can comprise any number of the same or different shapes, whether elongate or not.

The particular shapes illustrated in Figures 7 to 12 are merely by way of example and are non-limiting There are no restrictions on shape, save as to utility of the mat for any particular intended purpose. What is of importance is that the mats be of great weight, able to flex sufficiently for the intended purpose, and be durable to withstand extreme environmental conditions.

Where, in the mats of the invention, concrete is used for the elements, this will normally be either low density (e.g. about 160 lb/ft$^3$ - 2.6 g/ml) of granite, sand and cement, or of high density (e.g. about 220 lb/ft$^3$ - 3.5 g/ml)of iron ore, granite, sand and cement. Obviously, where sub-sea use is envisaged, the concrete will be suitable for such use.

The preferred ropes for making the flexible links between the members are polypropylene ropes of minimum strength such that a single strand has a breaking strain equivalent to twice the weight of the mat. The total number of connecting links should be such as to give a minimum safety margin over breaking strain of 10 times.

In the mats of the invention, it is normally preferred to keep the length of the rope links between adjacent concrete elements as short as possible, consistent with adequate flexing. Bearing in mind the massive nature of the mats, short links are normally most desirable although for some purposes longer links may be desirable. The shortest possible link will of course be of a length such that, upon flexure of the mat about that link to the desired degree, the adjacent elements are just brought into contact.

Where mats of the invention are to be laid on sub-sea pipelines or other such structures, the elements constituting the mat should be so shaped as not to provide any downward projections when they are laid over the structure i.e. point loading is to be avoided. It is possible in accordance with a preferred feature of the invention, to provide a layer of a cushion material such as neoprene or the like on those undersurfaces of the elements likely (in use of the mat) to contact directly the pipeline (or other structure) to reduce any risk of inadvertent damage. Thus, layer 70 in Figure 9 illustrates the provision of a neoprene cushion.

Whilst the elements in the mats of the invention are preferably made of concrete, they need not be so. They can be of other materials such as, for example, of steel or of steel with a rubber coating.

In the mats of the type illustrated in Figures 4A and 12, the ropes joining the elements are shown running in two directions perpendicular to each other. It is to be understood that there is no limitation on the angles between the flexible ropes. Thus, for example, in a structure like that in Figure 12, they may run at $60^{\circ}$ (for example) to each other, or $45^{\circ}$, or any other suitable angle. In the case of $60^{\circ}$, for example, there could be groups of six elements each joined in a hexagonal shape.

As stated previously, the ropes (or the like) can be secured to the elements in any convenient manner. In the case of cast concrete elements, the ropes can be secured in a clamp around which the concrete is cast. Thus the rope itself is gripped in a device comprising for example two bars clamped together, and the device is totally hidden within the cast concrete element. This is merely one example of a suitable fixing means.

CLAIMS:

1.        A negative buoyancy mat structure comprising a
plurality of individual concrete (or like) elements
(1;11;24;28;45;46;47; Fig. 3,7,8), each element being
jointed to at least one other adjacent such element to
form an articulate unitary mat structure weighing at
least ½ ton (508 kg).

2.        A mat according to claim 1 which includes a series
of elongate concrete elements (1;11;24;28;45,46) arranged
side-by-side and each laterally jointed to its adjacent
element(s) whereby the mat can flex at the joints along
axes parallel with, but spaced between, respective adjacent
elements in said series.

3.        A mat according to claim 2 which comprises at
least two of said series of elements (Fig. 4A), the two
series being arranged with elements of one series lying
end-to-end with respective elements of the other series,
and being jointed therebetween so that said mat additionally
can flex at the joints between the ends (12,12') of the
elements, along an axis lying generally perpendicular to
said elongate elements.

4.        A mat according to claim 2 or 3, which comprises
means (27) disposed between at least two adjacent
parallel elements to limit the angle through which the
mat can flex about the joint axis between said two elements.

5.        A mat according to claim 4, wherein said at least
two adjacent elements have a pair of opposed lateral faces
between which is inserted at least one wedge member (27)
to limit the angle of flex.

6.      A mat according to claim 1 which comprises an array of said elements (Figs. 1,4A,5,6,12), each element being jointed to at least one adjacent element to provide articulation of the mat about at least two mutually perpendicular axes therein.

7.      A mat according to claim 6, wherein the, or most of the, elements are non-elongate (Fig. 12), and at least some are jointed to at least three adjacent elements.

8.      A mat according to any preceding claim, wherein said elements are polygonal in cross-section (Figs. 1-10).

9.      A mat according to any preceding claim, wherein at least some of the joints are formed by elongate flexible elements such as ropes or wires (2,3,4,5,6,22,23,25,26,30, 44,61) extending between adjacent jointed elements and being located by embedment in the said respective adjacent elements.

10.     A mat according to any of claims 1 to 8, wherein the elements are jointed by a preformed flexible net, mat or grid structure to which the said elements are attached.

11.     A mat according to any preceding claim wherein, on one face of the mat, at least one element includes a cushioning surface member (70) thereon.

12.     A mat according to any preceding claim, which weighs (in air) from $2\frac{1}{2}$ tons (2540 kg) to 20 tons (20300 kg).

13.     A method of stabilising a pipeline on the sea bed which comprises laying over the pipeline a mat as claimed in any preceding claim with opposite ends of the mat lying on the seabed on opposite sides of the pipeline.

FIG. I.

FIG. 2.

FIG. 3.

*Fig. 4A.*

*Fig. 4B.*

*Fig. 4C.*

3/4

0152232

Fig.5.

Fig.6.

4/4

0152232

FIG. 7.

FIG. 8.

FIG. 9.

FIG. 10.

FIG. 11.

FIG. 12.